# EUROPÄISCHE PATENTSCHRIFT

(11) **EP 3 341 234 B1**
(45) Veröffentlichungstag und Bekanntmachung des Hinweises auf die Patenterteilung: **29.06.2022**
(21) Anmeldenummer: 16757852.5
(22) Anmeldetag: 23.08.2016
(51) Int. Cl.: B60L 3/00, B60L 50/13, B60L 50/51, B60L 15/00, B60L 50/75

(54) **REDUNDANTES ELEKTRISCHES ANTRIEBSSYSTEM FÜR EIN UNTERSEEBOOT**
REDUNDANT ELECTRIC DRIVE SYSTEM FOR A SUBMARINE
SYSTÈME D'ENTRAÎNEMENT ÉLECTRIQUE REDONDANT POUR SOUS-MARIN

(30) Priorität: 24.08.2015 DE 102015216097
(43) Veröffentlichungstag der Anmeldung: 04.07.2018
(73) Patentinhaber: thyssenkrupp Marine Systems GmbH, 24143 Kiel (DE); thyssenkrupp AG, 45143 Essen (DE)
(72) Erfinder: DANNENBERG, Norbert, 23628 Krummesse (DE)
(74) Vertreter: thyssenkrupp Intellectual Property GmbH
(86) Internationale Anmeldenummer: PCT/EP2016/069860
(87) Internationale Veröffentlichungsnummer: WO 2017/032761

(56) Entgegenhaltungen:
- EP-A1- 0 536 876
- WO-A1-2012/097925
- DE-A1-102006 051 831

## Beschreibung

Die Erfindung betrifft ein Antriebssystem für ein Unterseeboot, mit Energieerzeugungsmitteln, einem elektrischen Antriebsmotor, einer Mehrzahl an Gleichspannungsnetzen, die durch die Energieerzeugungsmittel mit Energie gespeist werden und mit der elektrischen Energie den Antriebsmotor versorgen, und einer Mehrzahl an Batteriesträngen.

Die Fahranlage eines konventionell angetriebenen Unterseeboots weist üblicherweise ein Gleichspannungsversorgungsnetz auf. Versorgt wird dieses Gleichspannungsnetz von wiederaufladbaren Energiespeichern, die regelmäßig als Batterien in das Netz eingebunden sind. Über das Gleichspannungsnetz wird ein elektrischer Antriebsmotor zum Antrieb des Unterseebootes mit der elektrischen Energie der Batterien gespeist, was gemeinhin bei getauchter Fahrt erforderlich ist. Eingebunden in das Gleichspannungsnetz ist ferner mindestens ein Ladegenerator, beispielsweise von einem Dieselmotor angetrieben, zum Laden der Batterien als auch zu Stromerzeugung bei Überwasserfahrt. Schließlich kann noch ein außenluftunabhängiges Antriebssystem vorgesehen sein, um den Antriebsmotor und das Bordnetz mit elektrischer Energie zu versorgen.

Es ist bekannt aus Redundanzgründen die Fahranlage in zwei Teilanlagen aufzuteilen, wobei beide Teilanlagen gemeinsam den Antriebsmotor mit elektrischer Energie versorgen. Dies dient der Betriebssicherheit, da auch bei Ausfall einer der beiden Teilanlagen der weitere Betrieb des Antriebsmotors möglich sein soll. In der DE 10 2006 051 831 A1 ist darüber hinaus noch beschrieben, die Batterien in einzelne Teilbatterien zusammenzufassen. Im Vergleich zur Bleibatterie haben moderne Batteriesysteme wie Lithium-Ionen-Batterien geringe Innenwiderstände, die im Fall eines Kurzschlusses die Ströme begrenzen. Um diese Kurzschlussströme beherrschen zu können, wird die Anlage in eine Vielzahl von Teilbatterien aufgeteilt. Über einen Wechselrichter ist jede Teilbatterie mit einer Teilwicklung des Antriebsmotors verbunden. Auch die DE 10 2008 018 457 A1 zeigt ein Gleichstrom-Versorgungsnetz für ein Unterseeboot. Zudem ist die WO 2017/032761 A1 zu nennen, die ein herkömmliches Fahrnetz für ein Unterseeboot zeigt, das zwei parallel zueinander schaltbare Teilnetze umfasst. Diese beiden Teilnetze sind im elektrischen Sinne parallel zueinander angeordnet bzw. schaltbar und zwar über die Netzkupplung.

Die Aufteilung der Batterieanlage in einzelne Teilbatterien und die Zuordnung jeweils eines Wechselrichters zu jeder Teilbatterie schafft die Möglichkeit, im Falle eines elektrischen Fehlers in einem Wechselrichter oder einer Teilwicklung des Antriebsmotors, nicht die gesamte Batterieanlage abschalten zu müssen.

Bei der bisherigen elektrischen Zweiteilung ist es erforderlich, eine zentrale Hauptschalttafel vorzuhalten, mit der Folge, dass keine Redundanz bei mechanischer Einwirkung gegeben ist. Auch ist eine Verwendung von offenen Leistungsschaltern mit Ausblasräumen erforderlich, was zu großen Bauvolumen führt. Sollen hohe elektrische Leistungen in der Fahranlage realisiert werden, führt dies zu Grenzen bei der Verfügbarkeit der mechanischen Leistungsschalter. Weiterhin ist von einer hohen Kurzschlussbelastung auszugehen.

Ausgehend hiervon besteht die Aufgabe der vorliegenden Erfindung darin, ein Antriebssystem für ein Unterseeboot bereitzustellen, das zumindest einige der genannten Nachteile überwindet. Die Aufgabe wird durch ein Antriebssystem für ein Unterseeboot nach Anspruch 1 gelöst.

In vorteilhafte Weise trägt das erfindungsgemäße Antriebssystem der Struktur moderner batteriebasierter Energiespeicher sowie den jüngsten Entwicklungstendenzen im Bereich der Leistungselektronik Rechnung, indem eine Abkehr von der bisher zentralen oder zweigeteilten Fahrnetztopologien hin zu einer Topologie bestehend aus mehreren, nebeneinander angeordneten autarken Teilfahrnetzen vorgeschlagen wird. Dies ermöglicht ein modulares System, bei dem unabhängig von der Gesamtkonzeption beziehungsweise der Größe und der Leistungsfähigkeit des Unterseebootes identische Teilnetze autark nebeneinander beziehungsweise parallel verwendet werden können. Hierbei ist unter dem Begriff "autark" zu verstehen, dass dieser die Möglichkeit bezeichnet, dass jedes der Teilnetze in seinem Leistungsniveau aktiv und unabhängig von jedem der anderen Teilnetze geregelt werden kann.

Jeder Batteriestrang und jeder Teil des Antriebsmotors kann ausschließlich mit ein und demselben Teilnetz verbunden werden

Durch die Mehrzahl an Teilnetzen wird eine hohe Verfügbarkeit erreicht, da die Teilnetze in einem Fehlerfall nicht gekuppelt werden müssen. Dies reduziert den schaltungstechnischen Aufwand. Sämtliche Energieerzeugungsmittel - auch Quellen genannt - und Energieverbraucher - auch Senken genannt - sind über leistungselektronische Stellglieder angebunden, so dass hierüber eine Begrenzung des prospektiven Kurzschlussstromes elektronisch oder ein lastloses Abschalten der betroffenen Komponente oder des betroffenen Teilnetzes erfolgen kann. Durch den Einsatz leistungselektronischer Stellglieder können außerdem die aufwendigen mit einem großen Bauvolumen verbundenen mechanischen Leistungsschalter entfallen. Bei den leistungselektronischen Stellgliedern kann es sich beispielsweise um Dioden oder Halbleiterelemente handeln. Bevorzugt können zum Leitungsschutz konventionelle Sicherungen vorgesehen sein. Weiterhin kann die zuvor zentral angeordnete Hauptschalttafel durch dezentral, gegebenenfalls in unterschiedlichen Räumen angeordnete, Energieverteiler ersetzt werden.

Vorteilhafte Ausgestaltungen und Weiterbildungen der Erfindung sind den Unteransprüchen und der Beschreibung unter Bezugnahme auf die Zeichnungen entnehmbar.

Eine vorteilhafte Ausgestaltung der Erfindung sieht vor, dass jedes der Gleichspannungsnetze eine erste Sammelschiene, die ein erstes Potenzial führt, und eine zweite Sammelschiene, die ein zweites Potential führt, umfasst. Hierdurch ergibt sich in vorteilhafter Weise die Möglichkeit eines modularen Aufbaus und einer einfachen Anpassung an Entwurfsvorgaben.

Eine vorteilhafte Ausgestaltung der Erfindung sieht vor, dass jedes der Gleichspannungsnetze über eine, insbesondere als bidirektionaler Spannungswandler ausgebildete, Stranganbindungseinheit mit einem der Batteriestränge verbindbar ist. Insbesondere kann die Stranganbindungseinheit einen DC/DC-Wandler umfassen. In vorteilhafter Weise erfüllt die Stranganbindungseinheit eine Doppelfunktion, nämlich indem durch sie wahlweise der Batteriestrang an das Gleichspannungsnetz zugeschaltet oder von den Gleichspannungsnetz getrennt und der Strangstrom des zugeschalteten Batterietanks eingestellt werden kann. Sofern erforderlich, kann eine Anpassung an einen von der Batteriespannung abweichenden Spannungsbereich vorgenommen werden bzw. eine konstante Spannung der Gleichspannungsnetze eingestellt werden. Hierdurch kann die Auslegung der verbleibenden leistungselektronischen Komponenten wesentlich vereinfacht werden.

Eine vorteilhafte Ausgestaltung der Erfindung sieht vor, dass die Stranganbindungseinheiten unabhängig voneinander steuerbar sind. Hierdurch ergibt sich in vorteilhafter Weise, dass in verschiedenen Batteriesträngen unterschiedliche Strangspannungen und/oder Strangströme eingestellt werden können. Hierdurch können zwischen den einzelnen Batteriesträngen fließende Ausgleichsströme verringert oder auch unterdrückt werden.

Eine vorteilhafte Ausgestaltung der Erfindung sieht vor, dass jedes der Gleichspannungsnetze über ein Wechselrichtermodul nur mit einer Teilwicklung des Antriebsmotors verbindbar ist. Insbesondere ist vorgesehen, dass die Anzahl der Gleichspannungsnetze mit der Anzahl der Teilwicklungen des Antriebsmotors übereinstimmt. Maximale Antriebsleistung des Antriebsmotors liegt demnach an, wenn über alle verfügbaren Gleichspannungsnetze elektrische Energie an den Antriebsmotor geliefert wird. Aus dieser Anordnung ergibt sich in vorteilhafter Weise bei Ausfall oder beim Abschalten eines der Gleichspannungsnetz bzw. des Wechselrichtermoduls, dass nur ein Teil des Antriebsmotors ausfällt bzw. dass die Energieversorgung für den verbleibenden Teil des Antriebsmotors weiterhin für einen Betrieb sichergestellt ist.

Eine vorteilhafte Ausgestaltung der Erfindung sieht vor, dass die Energieerzeugungsmittel über passive oder steuerbare Ladegleichrichter mit jedem der Gleichspannungsnetze verbindbar sind. Insbesondere ist vorgesehen, dass die Energieerzeugungsmittel zumindest einen Wechselstromladegenerator umfassen. Hierbei kann zunächst in einer ersten Variante vorgesehen sein, dass jedes der Gleichspannungsnetze über einen der Ladegleichrichter mit einer oder mehreren Phasen des zumindest einen Wechselstromladegenerators verbindbar ist. In einer zweiten Variante kann vorgesehen sein, dass jedes der Gleichspannungsnetze über einen der Ladegleichrichter mit einem Wechselspannungsladenetz des zumindest einen Wechselstromladegenerators verbindbar ist. Hierbei ist der zumindest eine Wechselstromladegenerator als Asynchron- oder Synchronmaschine mit Fremd- oder Permanenterregung ausgeführt. Da die den Gleichspannungsnetzen zugeordneten Ladegleichrichter durch Wechselspannung aus den Wechselstromladegeneratoren versorgt werden, ist vorzugsweise vorgesehen, dass die Ladegleichrichter über Wechselstromleistungsschalter mit dem zumindest einen Wechselstromladegenerator verbindbar sind. In vorteilhafter Weise ist hierdurch das Schalten hoher Ströme, auch im Fall eines Kurzschlusses, möglich, da aufgrund des natürlichen Nulldurchganges der Wechselspannung ein Verlöschen möglicher Lichtbögen im Wechselstromleistungsschalter sehr viel einfacher zu realisieren ist. Eine vorteilhafte Ausgestaltung der Erfindung sieht vor, dass die Energieerzeugungsmittel eine außenluftunabhängige Energieversorgung, vorzugsweise zumindest ein Brennstoffzellenmodul, umfassen. Hierdurch kann das Antriebssystem bei getauchter Fahrt des Unterseebootes mit Energie versorgt werden.

Eine vorteilhafte Ausgestaltung der Erfindung sieht vor, dass die Batteriestränge als Lithium-Ionen-Batterien ausgebildete Batteriemodule umfassen. Lithium-Ionen-Batterien weisen im Vergleich zu herkömmlichen Bleibatterien eine höhere Energiedichte auf und sind wartungsfrei.

Die Erfindung wird nachfolgend mit weiteren Merkmalen, Einzelheiten und Vorteilen anhand der beigefügten Figuren erläutert. Die Figuren illustrieren dabei lediglich beispielhafte Ausführungsformen der Erfindung.

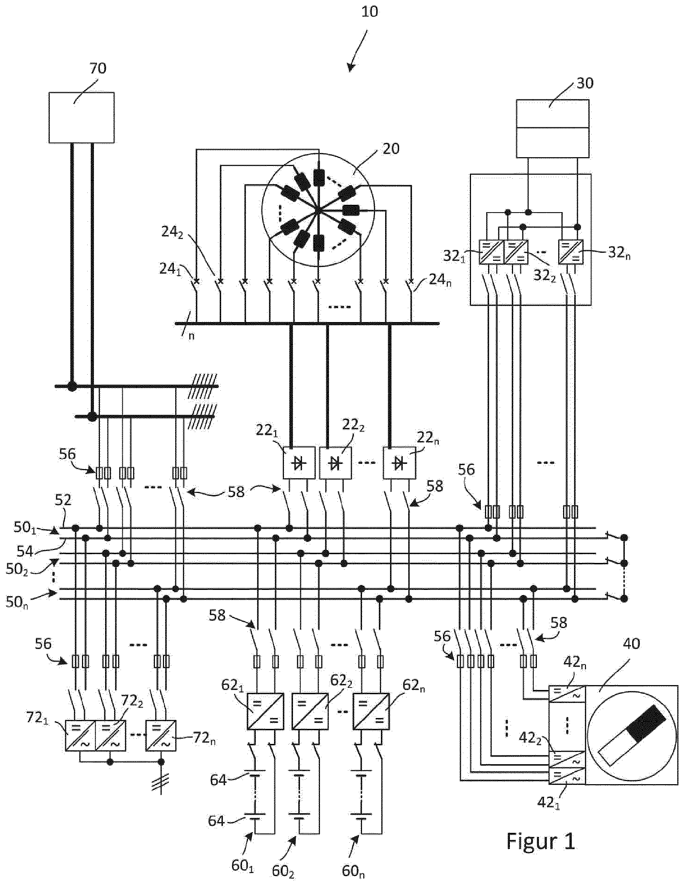

Die Figur zeigt ein Antriebssystem 10 für ein Unterseeboot. Das Antriebssystem 10 beinhaltet mehrere Gleichspannungsnetze 50₁, 50₂,...50ₙ, welche in ihrer Gesamtheit auch als Fahrnetz bezeichnet werden können. Erfindungsgemäß ist vorgesehen, dass jedes der Gleichspannungsnetze 50₁, 50₂,...50ₙ identisch aufgebaut ist, so dass jedes Gleichspannungsnetz 50₁, 50₂,...50ₙ autark die im Folgenden zu beschreibenden Funktionen ausführen kann. Jedes Gleichspannungsnetz umfasst eine erste Sammelschiene 52 und eine zweite Sammelschiene 54, wobei die erste Sammelschiene 52 ein erstes Potenzial und die zweite Sammelschiene 54 ein zweites Potenzial führen kann. Um ein eindeutiges Potential zu gewährleisten, sind die zweiten Sammelschienen untereinander verbindbar.

Das Antriebssystem 10 umfasst neben dem Fahrnetz zunächst einen beispielsweise als Propellerantrieb ausgebildeten Antriebsmotor 40, der über mehrere Wechselrichtermodule 42₁, 42₂,...42ₙ verfügt, wobei jedes der Wechselrichtermodule 42₁, 42₂,...42ₙ mit einem der Gleichspannungsnetze 50₁, 50₂,...50ₙ verbunden ist beziehungsweise von einem der Gleichspannungsnetz 50₁, 50₂,...50ₙ mit elektrischer Energie versorgt werden kann. Die für einen Betrieb des Antriebsmotors 40 erforderliche elektrische Energie kann durch verschiedene Energieerzeugungsmittel 20, 30, 70 bereitgestellt werden. Die Energieerzeugungsmittel können zunächst einen oder mehrere Wechselstromladegeneratoren 20 umfassen. Grundsätzlich ist die Anzahl der Wechselstromladegeneratoren 20 bedarfsabhängig und kann variieren und deren Einbindung ist schaltungstechnisch einfach und kann ohne weitere Bauteile wie Einspeisedioden erfolgen. Ferner können die Energieerzeugungsmittel eine außenluftunabhängige Energieversorgung umfassen, die beispielsweise und bevorzugt als Brennstoffzellenmodul 30 ausgebildet ist. Die leistungselektronische Anbindung der außenluftunabhängige Energieversorgung an die Gleichspannungsnetze 50₁, 50₂,...50ₙ erfolgt über DC/DC-Wandler 32₁, 32₂,...32ₙ, über die in jedes der Gleichspannungsnetze 50₁, 50₂,...50ₙ elektrische Energie eingespeist werden kann. Brennstoffzellenmodule können geräuschlos betrieben werden, insofern sie bevorzugt bei getauchter Fahrt oder bei Schleichfahrt betrieben werden. Schließlich können die Energieerzeugungsmittel einen Ladeanschluss 70 aufweisen, über welchen die Gleichspannungsnetze 50₁, 50₂,...50ₙ mit einem externen Spannungsnetz während eines Hafenaufenthalts verbunden werden können. Über mehrere Bordnetzumformer 72₁, 72₂,...72ₙ können weitere, nicht näher zu beschreibende elektrische Verbraucher des Unterseebootes angebunden sein. Hierbei kann insbesondere vorgesehen sein, dass für jedes der Gleichspannungsnetze 50₁, 50₂,...50ₙ ein Bordnetzumformer 72₁, 72₂,...72ₙ vorgesehen ist. Bei den Bordnetzumformern 72₁, 72₂,...72ₙ kann es sich bedarfsabhängig um AC-Varianten oder DC-Varianten handeln.

Ferner umfasst das Antriebssystem 10 mehrere als Energiespeicher fungierende Batteriestränge 60₁, 60₂,...60ₙ. Es können je Gleichspannungsnetz 50₁, 50₂,...50ₙ mindestens ein oder mehrere Batteriestränge 60₁, 60₂,...60ₙ vorgesehen sein. Jeder Batteriestrang 60₁, 60₂,...60ₙ kann aus mehreren in Reihe geschalteter Batteriemodule 64 gebildet sein. Jedes Batteriemodul 64 kann wiederum aus mehreren Batteriezellen gebildet sein, die beispielsweise als Lithium-Ionen-Batteriezellen ausgeführt sein können. Jeder der Batteriestränge 60₁, 60₂,...60ₙ ist jeweils über eine Stranganbindungseinheit 62₁, 62₂,...62ₙ, die bevorzugt als bidirektionaler DC/DC-Wandler ausgeführt ist, mit einem der Gleichspannungsnetze 50₁, 50₂,...50ₙ verbunden. Über eine Änderung der Anzahl der Batteriestränge 60₁, 60₂,...60ₙ je einzelnem Gleichspannungsnetz 50 kann eine Anpassung des Energieinhalt des Teilnetzes erfolgen.

Über die Stranganbindungseinheiten 62₁, 62₂,...62ₙ können die Batteriestränge 60₁, 60₂,...60ₙ bedarfsweise jeweils mit den Gleichspannungsnetzen 50₁, 50₂,...50ₙ verbunden werden oder von diesen getrennt werden und es kann der jeweilige Strangstrom der Batteriestränge 60₁, 60₂,...60ₙ eingestellt werden. Durch die Stranganbindungseinheiten 62₁, 62₂,...62ₙ kann der Strom beim Laden des jeweiligen Batteriestrangs 60₁, 60₂,...60ₙ eingestellt werden und es kann der Strom beim Entladen des jeweiligen Batteriestrangs 60₁, 60₂,...60ₙ eingestellt werden. Die Stranganbindungseinheiten 62₁, 62₂,...62ₙ sind unabhängig voneinander steuerbar, so dass in verschiedenen Batteriesträngen 60₁, 60₂,...60ₙ unterschiedliche Strangspannungen und/oder Strangströme eingestellt werden können.

Der Wechselstromladegenerator 20 umfasst nicht näher bezeichnete Wicklungen, wobei eine oder mehrere Wicklungen über Ladegleichrichter 22₁, 22₂,...22ₙ jeweils mit den Gleichspannungsnetzen 50₁, 50₂,...50ₙ zur Einspeisung von elektrischer Energie verbunden sind. In der Verbindung zwischen der Wicklung des Wechselstromladegenerator 20 und dem entsprechenden Ladegleichrichter 22₁, 22₂,...22ₙ können Wechselstromleistungsschalter 24₁, 24₂,...24ₙ vorgesehen sein. Hierdurch ist das Schalten hoher Ströme, auch im Kurzschlussfall, möglich, da aufgrund des natürlichen Nulldurchgangs der Wechselspannungen ein Verlöschen möglicher Lichtbögen im Schalter sehr viel einfacher realisiert werden kann.

In einer alternativen Ausgestaltung, bei der mehrere Wechselstromladegeneratoren 20 vorgesehen sind, können die Wechselstromladegeneratoren 20 auf eine gemeinsame Ladeschiene beziehungsweise ein Ladenetz synchronisiert werden, wobei die Ladeschiene wechselstromseitig die Ladegleichrichter 22₁, 22₂,...22ₙ versorgt.

Mit dem erfindungsgemäßen Antriebssystem 10 ist es möglich, die Spannungslage der einzelnen Gleichspannungsnetze 50₁, 50₂,...50ₙ je nach Anforderung und Betriebssituation des Unterseebootes zu variieren. So ist es beispielsweise möglich, eine wirkungsgradoptimierte Betriebsweise, eine signaturoptimierte Betriebsweise oder unterschiedliche Spannungen in den Gleichspannungsnetzen 50₁, 50₂,...50ₙ bei Fehlern oder Teilausfällen anzusteuern.

Bei Antriebssystemen für Unterseeboote nach dem Stand der Technik ist die Spannung des Fahrnetzes abhängig von der Belastung der Batterien und deren Ladezustand. Auf diese Spannungslage müssen sämtliche an das Fahrnetz angeschlossene Komponenten ausgelegt werden. Erfindungsgemäß kann durch Verwendung der Stranganbindungseinheiten 62₁, 62₂,...62ₙ mit bidirektionalen DC/DC-Wandlern eine Anpassung an einen anderen Spannungsbereich beziehungsweise eine andere Spannung in einzelnen Gleichspannungsnetzen 50₁, 50₂,...50ₙ vorgenommen werden. Die Auslegung der leistungselektronischen Komponenten, zu nennen wären hier der Antriebsmotor 40, die Ladegleichrichter 22₁, 22₂,...22ₙ, die DC/DC-Wandler 32 der außenluftunabhängigen Energieversorgung und die Bordnetzumformer 72, kann wesentlich vereinfacht werden. Da erfindungsgemäß vorgesehen ist, dass alle Energiequellen und alle Energiesenken über leistungselektronische Stellglieder angebunden sind, erfolgt eine Begrenzung der prospektiven Kurzschlussströme elektronisch beziehungsweise über ein Abschalten der Komponenten oder des betroffenen Gleichspannungsnetzes 50₁, 50₂,...50ₙ. Zum Leitungsschutz bzw. bei Versagen der leistungselektronischen Begrenzung der Stellglieder können Sicherungen 56 vorgesehen sein. Weiterhin können Komponenten, die nicht betrieben werden, durch Trennschalter 58 oder alternativ trennbare Abschnitte der Sammelschienen 52, 54 im lastlosen Zustand von der Spannung der Gleichspannungsnetze 50₁, 50₂,...50ₙ bedarfsweise getrennt werden.

Insgesamt kann durch das erfindungsgemäße Antriebssystem 10 eine Anpassung der Gesamtleistung eines Unterseebootes durch eine Änderung der Anzahl identischer und autarker Gleichspannungsnetze 50₁, 50₂,...50ₙ erfolgen. Auch kann eine Anpassung der Anzahl Gleichspannungsnetze 50₁, 50₂,...50ₙ an die Anzahl der Wechselrichtermodule 42₁, 42₂,...42ₙ des Antriebsmotors 40 erfolgen. Es kann beispielsweise vorgesehen sein, dass der Antriebsmotor 40 12 Wechselrichtermodule 42₁, 42₂,...42₁₂ umfasst und eine entsprechend Anzahl von 12 Gleichspannungsnetzen 50₁, 50₂,...50ₙ vorgesehen ist. Erfindungsgemäß ist vorgesehen, dass die Auslegung jedes einzelnen Gleichspannungsnetzes 50₁, 50₂,...50ₙ unabhängig von der Leistungsklasse eines Unterseebootes ist und dass die Auslegung der erforderlichen Leistung eines Unterseebootes durch die Anzahl zur Verfügung gestellter Gleichspannungsnetze 50 erfolgen kann.

### Bezugszeichenliste

- 10: Antriebssystem
- 20: Wechselstromladegenerator
- 22: Ladegleichrichter
- 24: Wechselstromleistungsschalter
- 26: Wechselspannungsladenetz
- 30: außenluftunabhängige Energieversorgung
- 32: DC/DC-Wandler
- 40: Antriebsmotor
- 42: Wechselrichtermodul
- 50: Gleichspannungsnetz
- 52: Sammelschiene
- 54: Sammelschiene
- 56: Sicherung
- 58: Trennschalter
- 60: Batteriestrang
- 62: Stranganbindungseinheit
- 64: Batteriemodul
- 70: Ladeanschluss
- 72: Bordnetzumformer

## Patentansprüche

1. Antriebssystem (10) für ein Unterseeboot, umfassend
Energieerzeugungsmittel (20, 30),
einen elektrischen Antriebsmotor (40),
mehr als zwei parallel angeordnete Gleichspannungsnetze (50₁, 50₂,...50ₙ), die durch die Energieerzeugungsmittel (20, 30) mit Energie gespeist werden und mit der elektrischen Energie den Antriebsmotor (40) versorgen,
eine Mehrzahl an Batteriesträngen (60₁, 60₂,...60ₙ), **gekennzeichnet dadurch, dass** die Gleichspannungsnetze (50₁, 50₂,...50ₙ) derart autark zueinander ausgebildet sind, dass jedes der Gleichspannungsnetze (50₁, 50₂,...50ₙ) mit zumindest einem der Batteriestränge (60₁, 60₂,...60ₙ), mit zumindest einem Teil der Energieerzeugungsmittel (20, 30) und mit zumindest einem Teil des Antriebsmotors (40) über jeweilige leistungselektronische Stellglieder (32, 42, 62) bedarfsweise verbindbar ist, sodass jedes der Gleichspannungsnetze (50₁, 50₂,...50ₙ) in seinem Leistungsniveau derart aktiv und unabhängig von jedem der anderen Gleichspannungsnetze (50₁, 50₂,...50ₙ) geregelt werden kann, dass die Spannungslage der einzelnen Gleichspannungsnetze (50₁, 50₂,...50ₙ) je nach Anforderung und Betriebssituation des Unterseebootes variierbar ist, wobei jeder Batteriestrang und jeder Teil des Antriebsmotors, ausschließlich mit ein und demselben Gleichspannungsnetz (50₁, 50₂,...50ₙ) verbunden werden kann.

2. Antriebssystem (10) nach Anspruch 1, **dadurch gekennzeichnet, dass** jedes der Gleichspannungsnetze (50₁, 50₂,...50ₙ) eine erste Sammelschiene (52₁, 52₂,...52ₙ), die ein erstes Potenzial führt, und eine zweite Sammelschiene (54₁, 54₂,...54ₙ), die ein zweites Potential führt, umfasst.

3. Antriebssystem (10) nach Anspruch 1 oder 2, **dadurch gekennzeichnet, dass** jedes der Gleichspannungsnetze (50₁, 50₂,...50ₙ) über eine, insbesondere als bidirektionaler Gleichstromsteller ausgebildete, Stranganbindungseinheit (62₁, 62₂,...62ₙ) mit einem der Batteriestränge (60₁, 60₂,...60ₙ) verbindbar ist.

4. Antriebssystem (10) nach Anspruch 3, **dadurch gekennzeichnet, dass** die Stranganbindungseinheiten (62₁, 62₂,...62ₙ) unabhängig voneinander steuerbar sind.

5. Antriebssystem (10) nach einem der Ansprüche 1 bis 4, **dadurch gekennzeichnet, dass** jedes der Gleichspannungsnetze (50₁, 50₂,...50ₙ) über ein oder mehrere Wechselrichtermodule (42) nur mit einer oder mehreren Teilwicklungen des Antriebsmotors (40) verbindbar ist.

6. Antriebssystem (10) nach einem der Ansprüche 1 bis 5, **dadurch gekennzeichnet, dass** die Energieerzeugungsmittel zumindest einen Wechselstromladegenerator (20) umfassen und jedes der Gleichspannungsnetze (50₁, 50₂,...50ₙ) über einen passiven oder steuerbaren Ladegleichrichter (22) mit einer oder mehreren Phasen des zumindest einen Wechselstromladegenerators (20) verbindbar ist.

7. Antriebssystem (10) nach einem der Ansprüche 1 bis 5, **dadurch gekennzeichnet, dass** die Energieerzeugungsmittel zumindest einen Wechselstromladegenerator (20) umfassen und jedes der Gleichspannungsnetze über einen passiven oder steuerbaren Ladegleichrichter (22) mit einem Wechselspannungsladenetz (26) des zumindest einen Wechselstromladegenerators (20) verbindbar ist.

8. Antriebssystem nach Anspruch 6 oder 7, **dadurch gekennzeichnet, dass** die Ladegleichrichter über Wechselstromleistungsschalter (24) mit dem zumindest einen Wechselstromladegenerator (20) verbindbar sind.

9. Antriebssystem nach einem der Ansprüche 1 bis 8, **dadurch gekennzeichnet, dass** die Energieerzeugungsmittel eine außenluftunabhängige Energieversorgung (30), vorzugsweise zumindest eine Brennstoffzelle, umfassen.

10. Antriebssystem nach einem der Ansprüche 1 bis 9, **dadurch gekennzeichnet, dass** die Batteriestränge (60₁, 60₂,...60ₙ) als Lithium-Ionen-Batterien ausgebildete Batteriemodule (64) umfassen.

## Claims

1. Drive system (10) for a submarine, comprising energy generation means (20, 30),
an electric drive motor (40),
more than two DC networks (50₁, 50₂, ... 50ₙ) arranged in parallel, which are fed with energy by the energy generation means (20, 30) and which supply the drive motor (40) with the electrical energy,
a plurality of battery strings (60₁, 60₂, ... 60ₙ), **characterized in that**
the DC networks (50₁, 50₂, ... 50ₙ) are designed autonomously with respect to one another in such a way that each of the DC networks (50₁, 50₂, ... 50ₙ) is connectable as required with at least one of the battery strings (60₁, 60₂, ... 60ₙ), with at least one part of the energy generation means (20, 30) and with at least one part of the drive motor (40) through respective power electronic actuators (32, 42, 62), such that the power level of each of the DC networks (50₁, 50₂, ... 50ₙ) can be regulated actively and independently of each of the other DC networks (50₁, 50₂, ... 50ₙ), in such a way that it is possible to vary the voltage level of the individual DC networks (50₁, 50₂, ... 50ₙ) depending on the requirement and the operating situation of the submarine, wherein each battery string and each part of the drive motor can be connected exclusively with one and the same DC network (50₁, 50₂, ... 50ₙ) .

2. Drive system (10) according to Claim 1, **characterized in that** each of the DC networks (50₁, 50₂, ... 50ₙ) comprises a first busbar (52₁, 52₂, ... 52ₙ) which carries a first potential, and a second busbar (54₁, 54₂, ... 54ₙ) which carries a second potential.

3. Drive system (10) according to Claim 1 or 2, **characterized in that** each of the DC networks (50₁, 50₂, ... 50ₙ) can be connected with one of the battery strings (60₁, 60₂, ... 60ₙ)via a string connection unit (62₁, 62₂, ... 62ₙ), in particular one designed as a bidirectional DC chopper.

4. Drive system (10) according to Claim 3, **characterized in that** the string connection units (62₁, 62₂, ... 62ₙ) can be controlled independently of one another.

5. Drive system (10) according to one of Claims 1 to 4, **characterized in that** each of the DC networks (50₁, 50₂, ... 50ₙ) can be connected via one or more inverter modules (42) with only one or with a plurality of partial windings of the drive motor (40).

6. Drive system (10) according to one of Claims 1 to 5, **characterized in that** the energy generation means comprise at least one AC charging generator (20), and each of the DC networks (50₁, 50₂, ... 50ₙ) can be connected via a passive or controllable charging rectifier (22) with one or with a plurality of phases of the at least one AC charging generator (20).

7. Drive system (10) according to one of Claims 1 to 5, **characterized in that** the energy generation means comprise at least one AC charging generator (20), and each of the DC networks can be connected via a passive or controllable charging rectifier (22) with an AC charging network (26) of the at least one AC charging generator (20).

8. Drive system according to Claim 6 or 7, **characterized in that** the charging rectifiers can be connected via AC power switches (24) with the at least one AC charging generator (20).

9. Drive system according to one of Claims 1 to 8, **characterized in that** the energy generation means comprise an energy supply (30) independent of external air, preferably at least one fuel cell.

10. Drive system according to one of Claims 1 to 9, **characterized in that** the battery strings (60₁, 60₂, ... 60ₙ)comprise battery modules (64) designed as lithium-ion batteries.

## Revendications

1. Système d'entraînement (10) pour un sous-marin, comprenant
des moyens de génération d'énergie (20, 30),
un moteur d'entraînement électrique (40),
plus de deux réseaux de tension continue (50₁, 50₂, ..., 50ₙ) disposés en parallèle, qui sont alimentés en énergie par les moyens de génération d'énergie (20, 30) et approvisionnent le moteur d'entraînement (40) avec l'énergie électrique,
une pluralité de branches de batterie (60₁, 60₂, ..., 60ₙ), **caractérisé en ce que**
les réseaux de tension continue (50₁, 50₂, ..., 50ₙ) sont configurés autonomes les uns par rapport aux autres de telle sorte que chacun des réseaux de tension continue (50₁, 50₂, ..., 50ₙ) peut être relié en fonction du besoin à au moins l'une des branches de batterie (60₁, 60₂, ..., 60ₙ), à au moins une partie des moyens de génération d'énergie (20, 30) et à au moins une partie du moteur d'entraînement électrique (40) par le biais d'organes de commande électroniques de puissance (32, 42, 62) respectifs, de sorte que chacun des réseaux de tension continue (50₁, 50₂, ..., 50ₙ) peut être régulé dans son niveau de puissance activement et indépendamment de chacun des autres réseaux de tension continue (50₁, 50₂, ..., 50ₙ) de telle sorte que l'état de tension des réseaux de tension continue (50₁, 50₂, ..., 50ₙ) individuels peut être varié en fonction de l'exigence et de la situation opérationnelle du sous-marin, chaque branche de batteries et chaque partie du moteur d'entraînement pouvant être reliées exclusivement à un seul et même réseau de tension continue (50₁, 50₂, ..., 50ₙ) .

2. Système d'entraînement (10) selon la revendication 1, **caractérisé en ce que** chacun des réseaux de tension continue (50₁, 50₂, ..., 50ₙ) comporte une première barre bus (52₁, 52₂, ..., 52ₙ), qui conduit un premier potentiel, et une deuxième barre bus (54₁, 54₂, ..., 54ₙ), qui conduit un deuxième potentiel.

3. Système d'entraînement (10) selon la revendication 1 ou 2, **caractérisé en ce que** chacun des réseaux de tension continue (50₁, 50₂, ..., 50ₙ) peut être relié à l'une des branches de batterie (60₁, 60₂, ..., 60ₙ)par le biais d'une unité de connexion de branche (62₁, 62₂, ..., 62ₙ), notamment réalisé sous la forme d'un convertisseur de courant continu.

4. Système d'entraînement (10) selon la revendication 3, **caractérisé en ce que** les unités de connexion de branche (62₁, 62₂, ..., 62ₙ) peuvent être commandées indépendamment les unes des autres.

5. Système d'entraînement (10) selon l'une des revendications 1 à 4, **caractérisé en ce que** chacun des réseaux de tension continue (50₁, 50₂, ..., 50ₙ) peut être relié seulement à un ou plusieurs enroulements partiels du moteur d'entraînement (40) par biais d'un ou plusieurs modules onduleurs (42).

6. Système d'entraînement (10) selon l'une des revendications 1 à 5, **caractérisé en ce que** les moyens de génération d'énergie comprennent au moins un générateur de charge de courant alternatif (20) et chacun des réseaux de tension continue (50₁, 50₂, ..., 50ₙ) peut être relié à une ou plusieurs phases de l'au moins un générateur de charge de courant alternatif (20) par le biais d'un redresseur de charge (22) passif ou commandable.

7. Système d'entraînement (10) selon l'une des revendications 1 à 5, **caractérisé en ce que** les moyens de génération d'énergie comprennent au moins un générateur de charge de courant alternatif (20) et chacun des réseaux de tension continue peut être relié à un réseau de charge de tension alternative (26) de l'au moins un générateur de charge de courant alternatif (20) par le biais d'un redresseur de charge (22) passif ou commandable.

8. Système d'entraînement selon la revendication 6 ou 7, **caractérisé en ce que** les redresseurs de charge peuvent être reliés à l'au moins un générateur de charge de courant alternatif (20) par le biais de commutateurs de puissance à courant alternatif (24).

9. Système d'entraînement selon l'une des revendications 1 à 8, **caractérisé en ce que** les moyens de génération d'énergie comprennent une source d'énergie indépendante de l'atmosphère externe (30), de préférence au moins une pile à combustible.

10. Système d'entraînement selon l'une des revendications 1 à 9, **caractérisé en ce que** les branches de batterie (60₁, 60₂, ..., 60ₙ)comprennent des modules de batterie (64) réalisés sous la forme de batteries lithium-ions.
